# FASCICULE DE BREVET EUROPEEN

(11) **EP 3 552 890 B1**
(45) Date de publication et mention de la délivrance du brevet: **27.03.2024**
(21) Numéro de dépôt: 19169000.7
(22) Date de dépôt: 12.04.2019
(51) Int. Cl.: B60R 25/021

(54) **DISPOSITIF DE VERROUILLAGE D'UNE COLONNE DE DIRECTION D'UN VEHICULE AUTOMOBILE**
VERRIEGELUNGSVORRICHTUNG EINER LENKSÄULE EINES KRAFTFAHRZEUGS
DEVICE FOR LOCKING A STEERING COLUMN OF A MOTOR VEHICLE

(30) Priorité: 12.04.2018 FR 1853222
(43) Date de publication de la demande: 16.10.2019
(73) Titulaire: Renault s.a.s, 92100 Boulogne Billancourt (FR)
(72) Inventeur: QUINTARD, Matis, 58000 Nevers (FR); PERRIN, Christophe, 58000 Nevers (FR)
(74) Mandataire: Renault Group

(56) Documents cités:
- DE-A1- 4 219 846
- DE-B1- 1 906 731
- FR-A1- 2 273 694
- GB-A- 1 297 908
- US-A- 3 748 877

## Description

La présente invention concerne un dispositif de verrouillage d'une colonne de direction d'un véhicule automobile.

On connaît des dispositifs de verrouillage d'une colonne de direction comportant un rotor monté pour tourner dans un stator, et portant des broches de verrouillage normalement rappelées dans une position de verrouillage pour laquelle les broches de verrouillage sont à cheval entre le rotor et le stator, et une clé configurée pour agir sur les broches de verrouillage dans un sens de déverrouillage lorsque la clé est introduite dans le rotor en passant par un canal d'introduction de clé.

Les dispositifs de verrouillage comportent en outre un pêne mobile entre une première position dans laquelle le pêne est engagé dans une cavité de la colonne de direction pour verrouiller la colonne de direction , et une seconde position dans laquelle le pêne est dégagé de la colonne de direction, le pêne étant associé au rotor par un mécanisme - en général du type à came - assurant un passage du pêne de la première position à la seconde position, ou de la seconde position à la première position.

Pour protéger les broches contre une tentative d'effraction, il est également connu de disposer une plaque de garde en amont des broches par référence à une direction d'introduction de la clé.

Par ailleurs, il est connu de retenir le pêne dans la position dégagée tant que la clé n'a pas été retirée et alors même que le dispositif est en position d'arrêt (clé en position « off »). A cette fin les dispositifs existants comportent généralement un détecteur de présence de clé en aval de la plaque de garde.

L'accumulation des organes ayant des fonctions variées conduit à un volume important du dispositif de verrouillage, tel que par exemple celui du document D1 DE 42 19 846 A1.

DE 42 19 846 décrit un dispositif de verrouillage d'une colonne de direction comportant : un stator, un rotor monté pour tourner dans le stator, et portant des broches de verrouillage normalement rappelées dans une position de verrouillage pour laquelle les broches de verrouillage sont à cheval entre le rotor et le stator; un canal formé dans le rotor, adapté pour l'introduction d'une clé configurée pour agir sur les broches de verrouillage dans un sens de déverrouillage lorsque la clé est introduite dans ce canal ; une plaque de garde disposée en amont des broches de verrouillage par référence à un sens d'introduction de la clé ; un pêne mobile entre une première position dans laquelle le pêne est engagé dans une cavité de la colonne de direction pour verrouiller la colonne de direction , et une seconde position dans laquelle le pêne est dégagé de la colonne de direction, le pêne étant associé au rotor par un mécanisme assurant un passage du pêne de la première position à la seconde position, ou de la seconde position à la première position; et un mécanisme de retenue du pêne dans la seconde position après que le pêne a été amené dans la seconde position et tant que la clé est présente dans le canal d'introduction de clé, dispositif dans lequel la plaque de garde est mobile entre une première position correspondant à une absence de clé dans le canal d'introduction de clé, et une seconde position correspondant à une présence de clé dans le canal d'introduction de clé, et la plaque de garde est configurée pour assurer un maintien du mécanisme de retenue du pêne dans ladite seconde position tant que la plaque de garde est dans la seconde position.

Un but de l'invention est de proposer un dispositif de verrouillage ayant un encombrement déduit tout en conservant les fonctions de sécurité des dispositifs existants.

En vue de la réalisation de ce but, on propose selon l'invention un dispositif de verrouillage selon la revendication 1.

Ainsi la plaque de garde a une double fonction qui est d'assurer tout à la fois la détection de la présence de la clé et la protection contre une intrusion par un perçage ou insertion d'un outil dans le rotor.

Selon une version avantageuse de l'invention la plaque de garde comporte une ouverture de passage de clé, qui est au moins partiellement décalée par rapport au canal d'introduction de clé lorsque la plaque de garde est dans la première position, la plaque de garde et la clé étant configurées pour qu'un appui de la clé sur la plaque de garde provoque un déplacement de la plaque de garde mettant en coïncidence l'ouverture de passage de clé et le canal d'introduction de clé.

Selon encore d'autres aspects de l'invention pris isolément ou en combinaison : le stator comporte une rainure circulaire disposée pour recevoir de façon ajustée ladite partie configurée pour s'étendre en saillie du rotor ; la plaque de garde comporte une partie biseautée adjacente à l'ouverture de passage de clé, formant une rampe tournée vers une extrémité amont du canal d'introduction de clé ; le mécanisme de retenue du pêne est disposé sur un coté du rotor; la plaque de garde est montée pour coulisser dans une fente du rotor ; ; le dispositif comporte un ressort de rappel de la tirette vers la première position du pêne ; l'extrémité repliée de la tirette et la partie en saillie de la plaque de garde sont configurées pour que le retrait de la clé provoque un retour de la plaque de garde dans la première position.

D'autres caractéristiques et avantages de l'invention apparaîtront encore à la lecture de la description qui suit d'un mode de réalisation préféré non limitatif d'un verrou de colonne de direction selon l'invention,en référence aux figures ci-jointes parmi lesquelles :
- la figure 1 est une vue en perspective schématique partiellement écorchée du verrou de colonne de direction selon l'invention en position de verrouillage de la colonne de direction, clé retirée,
- la figure 2 est une vue partielle en coupe selon la ligne II-II de la figure 1 de la plaque de garde formant un détecteur de présence de la clé,
- la figure 3 est une vue partielle en coupe selon la ligne III-III de la figure 2, de la plaque de garde et de la partie environnante du rotor, en position de verrouillage,
- la figure 4 est une vue analogue à celle de la figure 3 du dispositif lors de l'introduction de la clé,
- la figure 5 est une vue analogue à celle de la figure 1 du verrou de colonne de direction après introduction de la clé,
- la figure 6 est une vue analogue à celle de la figure 1 du verrou de colonne de direction après déverrouillage.

En référence aux figures, le dispositif de verrouillage illustré est destiné à assurer le verrouillage d'une colonne de direction 16 par introduction d'un pêne 17 dans une cavité 18 de la colonne de direction, ou le déverrouillage par désengagement du pêne 17.

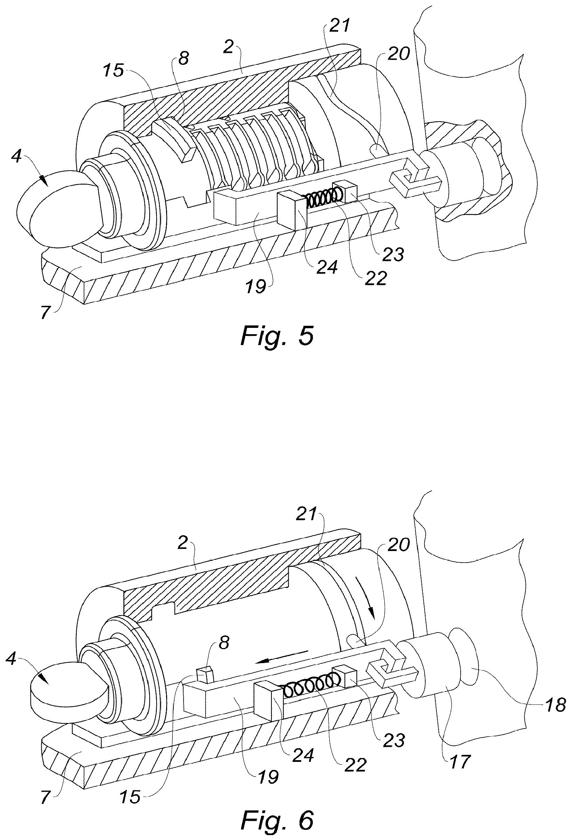

Le dispositif de verrouillage comporte de façon connue en soi un rotor 1 monté pour tourner dans un stator 2, et portant des broches de verrouillage 3, dont une seule a été illustrée sur les figures, normalement rappelées dans une position de verrouillage pour laquelle les broches de verrouillage sont à cheval entre le rotor et le stator. De façon également connue en soi, les broches de verrouillage 3 peuvent être déplacées vers une position de déverrouillage illustrée par la figure 6 au moyen d'une clé 4 comportant des reliefs 5 configurés pour agir sur les broches de verrouillage dans un sens de déverrouillage lorsque la clé est introduite dans le rotor en passant par un canal d'introduction de clé 6.

De façon encore connue en soi, le stator 2 est fixé à une partie de châssis 7 d'un véhicule, et le dispositif est pourvu d'une plaque de garde 8 disposée en amont des broches 3 par référence à un sens d'introduction de la clé 4 dans le canal d'introduction.

Selon l'invention, la plaque de garde 8 est mobile entre une première position correspondant à une absence de clé dans le canal d'introduction de clé, et une seconde position correspondant à une présence de la clé dans le canal d'introduction de clé 6.

Dans le mode de réalisation préféré illustré, la plaque de garde 8 comprend une ouverture 9 de passage de la clé ayant une forme correspondante à la section de la clé. La plaque de garde 8 est réalisée en une matière à haute résistance au perçage et/ou aux chocs et est montée pour coulisser dans une fente 10 s'étendant en travers du canal 6 d'introduction de clé. La fente 10 est fermée à une extrémité. En position verrouillée, la plaque de garde 8 est en butée dans le fond de la fente 10. La plaque de garde 8 est dimensionnée pour que dans cette position le bord 11 de la plaque de garde 8 opposé au fond de la fente 10 affleure la surface latérale du rotor. En regard du bord 11, le stator comporte une rainure 12 ayant une largeur au moins égale à l'épaisseur de la plaque de garde 8, et une longueur suffisante pour permettre une rotation du rotor lorsque la plaque de garde 8 est engagée dans la rainure 12.

Sur un côté de l'ouverture 9 opposé au fond de la fente 10, la plaque de garde 8 comporte un bord biseauté formant une rampe 13 adjacente à l'ouverture 9 et tournée vers l'extrémité amont 14 du canal d'introduction de clé 6.

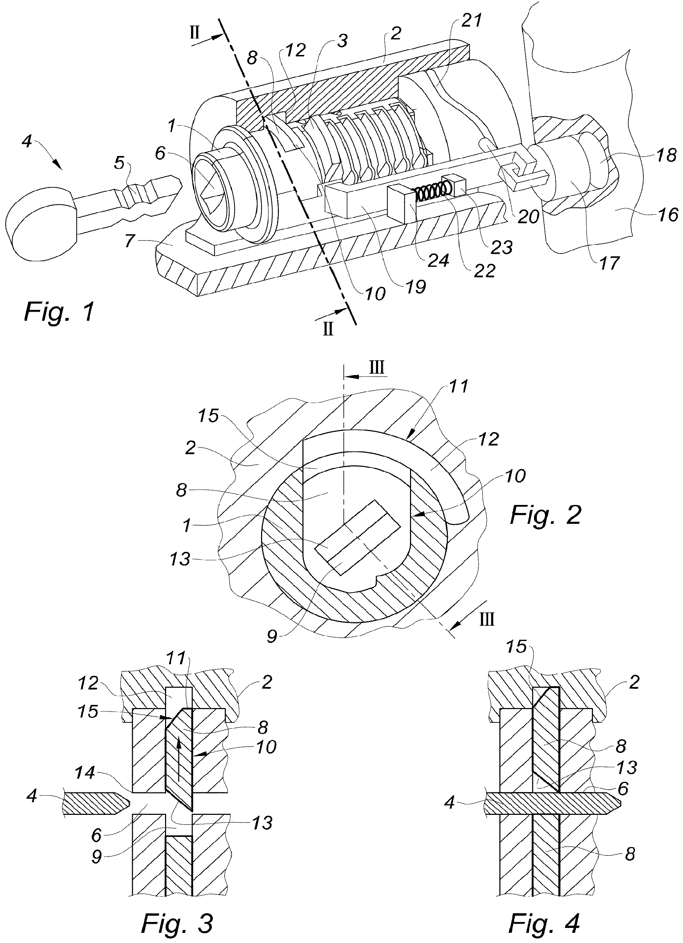

L'ouverture 9 et la rampe 13 sont configurées pour qu'au repos, c'est-à-dire en l'absence de clé, l'ouverture 9 soit décalée par rapport au canal d'introduction de clé 6 et que la rampe 13 soit en regard du canal 6. La pente de la rampe 13 est déterminée pour qu'un appui de la clé sur la rampe 13 provoque un déplacement de la plaque de garde 8 mettant en coïncidence l'ouverture de passage de clé 9 et le canal d'introduction de clé 6, comme illustré par la figure 4.

Dans cette position le bord 11 de la plaque de garde 8 est en saillie par rapport à la surface latérale du rotor et est encastré dans la rainure 12. Cette configuration permet de tourner le rotor dans la position de déverrouillage tout en empêchant un arrachement du rotor.

La partie de la plaque de garde 8 qui est en saillie présente une face biseautée 15 tournée vers l'extrémité d'introduction de la clé 4.

Le dispositif de manoeuvre du pêne 17 comprend une tirette 19 portée par le stator 2 et montée pour coulisser sur le côté du rotor 1.

La tirette 19 présente une extrémité reliée de façon articulée au pêne 17 et comporte un ergot de manoeuvre 20 appliqué par un ressort 22 contre une came 21 portée par le rotor. A cet effet, le ressort 22 a une extrémité accrochée sur un plot 23 porté par la tirette 19, et une extrémité opposée accrochée à un plot 24 porté par le stator. A partir d'une position de départ correspondant à une position d'arrêt du moteur du véhicule, la came 21 a une configuration en hélice transformant le mouvement de rotation du rotor en un mouvement de translation de la tirette 19 jusqu'à ce que la tirette 19 atteigne une position pour laquelle le pêne 17 est dégagé de la cavité 18 et le contact est mis. Au-delà de cette position la came 21 est circulaire ce qui permet de déplacer le rotor vers une position de fermeture du contact d'alimentation du démarreur.

Lors de l'arrêt du moteur, le rotor est ramené dans une position pour laquelle le pêne est normalement réintroduit dans la cavité 18 de la colonne de direction 16. Afin de maintenir la colonne de direction déverrouillée jusqu'au retrait de la clé, l'extrémité de la tirette opposée au pêne est pliée pour former une surface d'appui sur le biseau 15 de la plaque de garde 8, comme cela est visible à la figure 6. A cet effet la came 21 est configurée pour que l'extrémité repliée de la tirette 19 soit au-delà de la plaque de garde avant que le biseau 15 soit en regard de l'extrémité de la tirette. Tant que la clé est engagée dans le rotor, le pêne 17 est maintenu dégagé de la colonne de direction 16. Lorsque la clé est retirée, et sous l'action du ressort 22, l'effet de rampe entre le biseau 15 et la face en regard de la tirette 19 repousse la plaque de garde vers le bas, ce qui libère la tirette 19. Sous l'action du ressort 22, le pêne 17 est alors ramené dans la position de verrouillage.

Bien entendu l'invention n'est pas limitée au mode de réalisation décrit et est susceptible de variantes de réalisation sans sortir du cadre de l'invention telle que définie par les revendications.

## Revendications

1. Dispositif de verrouillage d'une colonne de direction (16) comportant : un stator (2), un rotor (1) monté pour tourner dans le stator (2), et portant des broches de verrouillage (3) normalement rappelées dans une position de verrouillage pour laquelle les broches de verrouillage sont à cheval entre le rotor (1) et le stator (2) ; un canal (6) formé dans le rotor (1), adapté pour l'introduction d'une clé (4) configurée pour agir sur les broches de verrouillage dans un sens de déverrouillage lorsque la clé est introduite dans ce canal (6) ; une plaque de garde (8) disposée en amont des broches de verrouillage par référence à un sens d'introduction de la clé ; un pêne (17) mobile entre une première position dans laquelle le pêne (17) est engagé dans une cavité (18) de la colonne de direction (16) pour verrouiller la colonne de direction (16), et une seconde position dans laquelle le pêne (17) est dégagé de la colonne de direction (16), le pêne (17) étant associé au rotor (1) par un mécanisme assurant un passage du pêne (17) de la première position à la seconde position, ou de la seconde position à la première position comprenant une tirette (19) portée par le stator (2) et ayant un ergot (20) engagé contre une came (21) du rotor (1), et reliée au pêne (17) ; et un mécanisme de retenue du pêne (17) dans la seconde position après que le pêne (17) a été amené dans la seconde position et tant que la clé est présente dans le canal d'introduction de clé (6), la plaque de garde (8) étant mobile entre une première position correspondant à une absence de clé dans le canal d'introduction de clé (6), et une seconde position correspondant à une présence de clé dans le canal d'introduction de clé (6), et la plaque de garde (8) étant configurée pour assurer un maintien du mécanisme de retenue du pêne (15, 19) dans ladite seconde position tant que la plaque de garde (8) est dans la seconde position, la plaque de garde (8) étant montée pour se déplacer transversalement au canal d'introduction de clé (6), et comporte une partie (15) configurée pour s'étendre en saillie du rotor (1) lorsque l'ouverture de passage de clé de la plaque de garde (8) est en coïncidence avec le canal d'introduction de clé (6), et en ce que le mécanisme de retenue (15, 19) du pêne comporte un organe de retenue formé par une extrémité de la tirette (19) repliée pour s'étendre en regard de la partie (15) en saillie de la plaque de garde (8) et qui prend appui sur la partie (15) configurée pour s'étendre en saillie du rotor (1) lorsque le pêne (17) est dans la seconde position, **caractérisé en ce que** la came (21) a une configuration en hélice transformant le mouvement de rotation du rotor (1) en un mouvement de translation de la tirette (19) jusqu'à ce que la tirette (19) atteigne une position pour laquelle le pêne (17) est dégagé de la cavité (18).

2. Dispositif de verrouillage selon la revendication 1, **caractérisé en ce que** la plaque de garde (8) comporte une ouverture de passage de clé (9), qui est au moins partiellement décalée par rapport au canal d'introduction de clé (6) lorsque la plaque de garde est dans la première position, la plaque de garde et la clé étant configurées pour qu'un appui de la clé sur la plaque de garde provoque un déplacement de la plaque de garde mettant en coïncidence l'ouverture de passage de clé (9) et le canal d'introduction de clé (6).

3. Dispositif de verrouillage selon la revendication 1, **caractérisé en ce que** le stator comporte une rainure circulaire (12) disposée pour recevoir de façon ajustée ladite partie configurée pour s'étendre en saillie du rotor.

4. Dispositif de verrouillage selon l'une quelconque des revendications 2 ou 3, **caractérisé en ce que** la plaque de garde (8) comporte une partie biseautée (13) adjacente à l'ouverture de passage de clé, formant une rampe tournée vers une extrémité amont (14) du canal d'introduction de clé.

5. Dispositif de verrouillage selon l'une quelconque des revendications 1 à 4, **caractérisé en ce que** le mécanisme de retenue du pêne (15, 19) est disposé sur un coté du rotor (1).

6. Dispositif de verrouillage selon l'une quelconque des revendications 1 à 5, **caractérisé en ce que** la plaque de garde est montée pour coulisser dans une fente (10) du rotor.

7. Dispositif de verrouillage selon la revendication 1, **caractérisé en ce que** le mécanisme de retenue du pêne dans la seconde position comprend une extrémité de la tirette (19) repliée pour s'étendre en regard de la partie en saillie (15) de la plaque de garde.

8. Dispositif de verrouillage selon la revendication 8, caractérisé en cequ'il comprend un ressort de rappel (22) de la tirette vers la première position du pêne.

9. Dispositif de verrouillage selon la revendication 8, **caractérisé en ce que** l'extrémité repliée de la tirette (19) et la partie en saillie (15) de la plaque de garde sont configurées pour que le retrait de la clé provoque un retour de la plaque de garde dans la première position.

## Patentansprüche

1. Verriegelungsvorrichtung für eine Lenksäule (16), aufweisend: einen Stator (2), einen Rotor (1), der so montiert ist, dass er sich in dem Stator (2) dreht, und Verriegelungsstifte (3) trägt, die normalerweise in eine Verriegelungsposition zurückgeführt sind, in der die Verriegelungsstifte genau zwischen dem Rotor (1) und dem Stator (2) liegen; einen Kanal (6), der in dem Rotor (1) gebildet ist und zum Einstecken eines Schlüssels (4) geeignet ist, der dazu ausgestaltet ist, auf die Verriegelungsstifte in eine Entriegelungsrichtung zu wirken, wenn der Schlüssel in diesen Kanal (6) eingesteckt wird; eine Schutzplatte (8), die den Verriegelungsstiften in Bezug auf eine Schlüsseleinsteckrichtung vorgelagert ist; einen Riegel (17), der zwischen einer ersten Position, in welcher der Riegel (17) in einen Hohlraum (18) der Lenksäule (16) eingeführt ist, um die Lenksäule (16) zu verriegeln, und einer zweiten Position, in welcher der Riegel (17) aus der Lenksäule (16) herausgeführt ist, beweglich ist, wobei der Riegel (17) dem Rotor (1) über einen Mechanismus zugeordnet ist, der einen Übergang des Riegels (17) aus der ersten Position in die zweite Position oder aus der zweiten Position in die erste Position gewährleistet, umfassend einen Schieber (19), der von dem Stator (2) getragen wird und einen Vorsprung (20) hat, der gegen einen Nocken (21) des Rotors (1) geführt ist, und der mit dem Riegel (17) verbunden ist; und einen Mechanismus zum Zurückhalten des Riegels (17) in der zweiten Position, nachdem der Riegel (17) in die zweite Position gebracht wurde und solange der Schlüssel in dem Schlüsseleinsteckkanal (6) vorhanden ist, wobei die Schutzplatte (8) zwischen einer ersten Position, die einem Nichtvorhandensein eines Schlüssels in dem Schlüsseleinsteckkanal (6) entspricht, und einer zweiten Position, die einem Vorhandensein eines Schlüssels in dem Schlüsseleinsteckkanal (6) entspricht, beweglich ist, und wobei die Schutzplatte (8) dazu ausgestaltet ist, ein Halten des Mechanismus zum Zurückhalten des Riegels (15, 19) in der zweiten Position zu gewährleisten, solange die Schutzplatte (8) in der zweiten Position ist, wobei die Schutzplatte (8) so montiert ist, dass sie sich quer zu dem Schlüsseleinsteckkanal (6) verlagert, und einen Teil (15) umfasst, der dazu ausgestaltet ist, sich vom Rotor (1) abstehend zu erstrecken, wenn die Schlüsseldurchführungsöffnung der Schutzplatte (8) mit dem Schlüsseleinsteckkanal (6) in Übereinstimmung ist, und dadurch, dass der Mechanismus zum Zurückhalten (15, 19) des Riegels ein Rückhalteorgan aufweist, das durch ein Ende des Schiebers (19) gebildet wird, das so umgebogen ist, dass es sich gegenüber dem abstehenden Teil (15) der Schutzplatte (8) erstreckt, und das an dem Teil (15) anliegt, das dazu ausgestaltet ist, sich von dem Rotor (1) abstehend zu erstrecken, wenn der Riegel (17) in der zweiten Position ist,
**dadurch gekennzeichnet, dass** der Nocken (21) eine helixartige Gestalt hat, welche die Drehbewegung des Rotors (1) in eine Translationsbewegung des Schiebers (19) umwandelt, bis der Schieber (19) eine Position erreicht, in welcher der Riegel (17) aus dem Hohlraum (18) herausgeführt ist.

2. Verriegelungsvorrichtung nach Anspruch 1, **dadurch gekennzeichnet, dass** die Schutzplatte (8) eine Schlüsseldurchführungsöffnung (9) aufweist, die mindestens teilweise in Bezug auf den Schlüsseleinsteckkanal (6) versetzt ist, wenn die Schutzplatte in der ersten Position ist, wobei die Schutzplatte und der Schlüssel dazu ausgestaltet sind, dass ein Drücken des Schlüssels auf die Schutzplatte eine Verlagerung der Schutzplatte bewirkt, die die Schlüsseldurchführungsöffnung (9) und den Schlüsseleinsteckkanal (6) in Übereinstimmung bringt.

3. Verriegelungsvorrichtung nach Anspruch 1, **dadurch gekennzeichnet, dass** der Stator eine kreisförmige Nut (12) aufweist, die angeordnet ist, um den Teil, der dazu ausgestaltet ist, sich vom Rotor abstehend zu erstrecken, passend aufzunehmen.

4. Verriegelungsvorrichtung nach einem der Ansprüche 2 oder 3, **dadurch gekennzeichnet, dass** die Schutzplatte (8) einen abgeschrägten Teil (13) aufweist, der an die Schlüsseldurchführungsöffnung angrenzt und eine Rampe bildet, die einem vorgelagerten Ende (14) des Schlüsseleinsteckkanals zugewandt ist.

5. Verriegelungsvorrichtung nach einem der Ansprüche 1 bis 4, **dadurch gekennzeichnet, dass** der Mechanismus zum Zurückhalten des Riegels (15, 19) auf einer Seite des Rotors (1) angeordnet ist.

6. Verriegelungsvorrichtung nach einem der Ansprüche 1 bis 5, **dadurch gekennzeichnet, dass** die Schutzplatte so montiert ist, dass sie in einem Schlitz (10) des Rotors gleitet.

7. Verriegelungsvorrichtung nach Anspruch 1, **dadurch gekennzeichnet, dass** der Mechanismus zum Zurückhalten des Riegels in der zweiten Position ein Ende des Schiebers (19) umfasst, das so umgebogen ist, dass es sich gegenüber dem abstehenden Teil (15) der Schutzplatte erstreckt.

8. Verriegelungsvorrichtung nach Anspruch 8, **dadurch gekennzeichnet, dass** sie eine Rückholfeder (22) zum Zurückholen des Schiebers zu der ersten Position des Riegels hin umfasst.

9. Verriegelungsvorrichtung nach Anspruch 8, **dadurch gekennzeichnet, dass** das umgebogene Ende des Schiebers (19) und der abstehende Teil (15) der Schutzplatte dazu ausgestaltet sind, dass das Abziehen des Schlüssels ein Zurückkehren der Schutzplatte in die erste Position bewirkt.

## Claims

1. Locking device for locking a steering column (16), comprising: a stator (2), a rotor (1) mounted to rotate in the stator (2) and bearing locking pins (3) normally returned to a locking position in which the locking pins are straddled between the rotor (1) and the stator (2); a channel (6) formed in the rotor (1) and designed for the insertion of a key (4) configured to act on the locking pins in an unlocking direction when the key is inserted into this channel (6); a guard plate (8) arranged upstream of the locking pins with reference to a direction of insertion of the key; a bolt (17) which is movable between a first position in which the bolt (17) is engaged in a cavity (18) of the steering column (16) in order to lock the steering column (16), and a second position in which the bolt (17) is disengaged from the steering column (16), the bolt (17) being associated with the rotor (1) by a mechanism allowing the bolt (17) to pass from the first position to the second position, or from the second position to the first position, and comprising a pull rod (19) which is borne by the stator (2) and has a stud (20) engaged against a cam (21) of the rotor (1), and which is connected to the bolt (17); and a mechanism for retaining the bolt (17) in the second position after the bolt (17) has been brought into the second position and as long as the key is present in the key insertion channel (6), the guard plate (8) being movable between a first position corresponding to the absence of a key in the key insertion channel (6), and a second position corresponding to the presence of a key in the key insertion channel (6), and the guard plate (8) being configured to maintain the mechanism (15, 19) for retaining the bolt in said second position as long as the guard plate (8) is in the second position, the guard plate (8) being mounted so as to move transversely to the key insertion channel (6) and comprising a part (15) configured to project from the rotor (1) when the key passage opening in the guard plate (8) coincides with the key insertion channel (6), and in that the mechanism (15, 19) for retaining the bolt comprises a retaining member formed by an end of the pull rod (19) which is bent so as to extend facing the projecting part (15) of the guard plate (8) and which bears on the part (15) configured to project from the rotor (1) when the bolt (17) is in the second position,
**characterized in that** the cam (21) has a helical configuration which converts the rotational movement of the rotor (1) into a translational movement of the pull rod (19) until the pull rod (19) reaches a position in which the bolt (17) is disengaged from the cavity (18).

2. Locking device according to Claim 1, **characterized in that** the guard plate (8) comprises a key passage opening (9) which is at least partially offset with respect to the key insertion channel (6) when the guard plate is in the first position, the guard plate and the key being configured such that a pressing action of the key on the guard plate produces a movement of the guard plate which causes the key passage opening (9) and the key insertion channel (6) to coincide.

3. Locking device according to Claim 1, **characterized in that** the stator comprises a circular groove (12) arranged to receive in a fitted manner said part configured to project from the rotor.

4. Locking device according to either one of Claims 2 and 3, **characterized in that** the guard plate (8) comprises a bevelled part (13) adjacent to the key passage opening and forming a ramp facing towards an upstream end (14) of the key insertion channel.

5. Locking device according to any one of Claims 1 to 4, **characterized in that** the mechanism (15, 19) for retaining the bolt is arranged on one side of the rotor (1) .

6. Locking device according to any one of Claims 1 to 5, **characterized in that** the guard plate is mounted so as to slide in a slot (10) of the rotor.

7. Locking device according to Claim 1, **characterized in that** the mechanism for retaining the bolt in the second position comprises an end of the pull rod (19) which is bent so as to extend facing the projecting part (15) of the guard plate.

8. Locking device according to Claim 8, **characterized in that** it comprises a return spring (22) for returning the pull rod to the first position of the bolt.

9. Locking device according to Claim 8, **characterized in that** the bent end of the pull rod (19) and the projecting part (15) of the guard plate are configured such that the removal of the key causes the guard plate to return to the first position.
